# EUROPEAN PATENT APPLICATION

(11) **EP 4 786 133 A1**
(43) Date of publication of application: **05.08.2026**
(21) Application number: 25218225.8
(22) Date of filing: 25.11.2025
(51) Int. Cl.: B29C 44/04, B29C 44/34, B29C 44/42, B29C 44/58, C08J 9/00, C08J 9/12

(54) **PROCESS FOR MANUFACTURING FOOTWEAR SOLE MATERIAL AND FOOTWEAR SOLE MATERIAL OBTAINED THEREFROM**

(30) Priority: 21.04.2025 VN 202500282 U
(71) Applicant: ADORA (VIETNAM) FOOTWEAR COMPANY LIMITED, 08515 Tam Diep Ward Ninh Binh Province (VN)
(72) Inventor: Wen, Chen Hsiu, Taichung City (TW)
(74) Representative: Lichtnecker, Markus Christoph

(57) **Abstract**

The invention relates to a process for manufacturing footwear sole material, which comprising the following steps: (i) material mixture preparation; (ii) Microcellular Foaming using MuCell Technology; (iii) Injection Molding of the Microcellularly Foamed Material into the Vented 3D-Printed Mold. Additionally, the invention relates to the footwear sole material produced by said process.

## Description

### Technical Field

The invention relates to a process for manufacturing footwear sole material using a supercritical injection process combined with a vented 3D-printed mold. Additionally, the invention relates to the footwear sole material produced by said process.

### Prior Art

Document US2020281314A1 discloses a footwear sole structure and a process for manufacturing the same, comprising at least one polymeric foam component expanded via a supercritical fluid (SCF) expansion process of a preformed, pre-expanded polymeric material. The polymeric foam component may include voids located and shaped during the formation of the pre-expanded polymeric material to promote uniform expansion and optimal curing conditions during the SCF expansion process. At least one polymeric foam component has a set of physical properties and can be bonded or assembled in combination with one or more footwear sole components having the same or a different set of physical properties.

Document CN107073768B discloses a system and a process for producing foamed parts. The process comprises the steps of: providing a polymer processing system; creating a mold having at least one expandable mold cavity in communication with the polymer processing system; mixing a polymeric material and a blowing agent within the polymer processing system to create a non-foamed mixture; injecting a volume of the mixture from the polymer processing system into the expandable mold cavity; and expanding the mold cavity to expand the non-foamed mixture and form a foamed preform. Subsequently, the foamed preform can be placed into a compression mold to be compression molded into a finished part.

Conventional injection molding processes suffer from drawbacks such as high material weight, increased raw material consumption, and significant CO₂ emissions, resulting in adverse environmental impacts. Accordingly, to overcome these shortcomings, supercritical injection molding has been proposed in the art. However, this production process still exhibits several disadvantages, including long production times, high labor requirements that affect delivery schedules, mottled product surfaces, and the presence of gas bubbles that compromise the aesthetic quality of the product.

Therefore, there is a need for a product that is free from the afore-mentioned disadvantages.

### Technical Solution

Accordingly, the present invention provides a process for manufacturing a footwear sole material, the process comprising the following steps:
i) Material Preparation:
   the material mixture comprises the following components by weight percentage:
   thermoplastic: 50% to 60%;
   transparent resin: 3% to 6%;
   antioxidant: 1% to 3%;
   foaming agent FOAM 45C: 15% to 25%;
   thermoplastic elastomer: 6% to 10%;
   polyethylene (PE) resin: 1% to 3%;
   POM: 2% to 4%;
   stearic acid: 1% to 3%;
   anti-abrasion agent: 1% to 3%;
   fine filler: 0.3% to 0.5%;
ii) Microcellular Foaming:
   injecting N₂, CO₂, or Ar (Argon) gas into the molten material mixture from step i) at a pressure in a range of 200 to 280 MPa, and subsequently reducing the pressure to a range of 10 to 20 MPa to create the microcellularly foamed material;
iii) Injection Molding of the Microcellularly Foamed Material
   injecting the foamed material from step ii) through a nozzle into the mold cavity of a vented 3D-printed steel mold, wherein the 3D-printed steel mold comprises:
   a plurality of micropores having non-uniform sizes and varying densities; and
   a plurality of heat-conducting vent pins disposed at locations prone to gas trapping

According to an aspect of the invention, wherein the thermoplastic is selected from the group consisting of TPU, EVA, TPEE, PEbax, and VESTAMID^{®} E.

According to an aspect of the invention, wherein the fine filler is titanium dioxide (TiO₂).

According to another aspect of the invention, wherein the fine filler has a particle size in the range of 200 to 300 nm.

According to another aspect of the invention, wherein the microcellular foaming step is further performed at an injection temperature in a range of 180°C to 250°C and a mold temperature in a range of 30°C to 60°C.

According to another aspect of the invention, wherein the microcellular foaming step is further performed at an injection temperature in a range of 160°C to 245°C and a mold temperature in a range of 30°C to 80°C.

According to another aspect of the invention, wherein the microcellular foaming step is further performed at an injection temperature in a range of 180°C to 280°C and a mold temperature in a range of 30°C to 60°C.

According to another aspect of the invention, wherein the microcellularly foamed material has a foam cell size in a range of 90 to 140 µm.

Another object of the invention is to provide a footwear sole material produced according to the aforementioned aspects, wherein the material comprises the following components by weight percentage:
thermoplastic: 50% to 60%;
transparent resin: 3% to 6%;
antioxidant: 1% to 3%;
foaming agent FOAM 45C: 15% to 25%;
thermoplastic elastomer: 6% to 10%;
polyethylene (PE) resin: 1% to 3%;
POM: 2% to 4%;
stearic acid: 1% to 3%;
anti-abrasion agent: 1% to 3%;
fine filler: 0.3% to 0.5%.

In another aspect, the fine filler in the footwear sole material is titanium dioxide (TiO₂).

In yet another aspect, the fine filler in the footwear sole material has a particle size in the range of 200 to 300 nm.

In yet another aspect, the footwear material further comprises microcellular foam having a size in a range of 90 to 140 µm.

### Advantages of The Invention

∘ A 10-30% reduction in footwear weight, which helps reduce foot fatigue.
∘ Increased resilience and improved shock absorption, making it suitable for athletic and running shoes.
∘ A 15-25% saving in raw materials, thereby reducing production costs.
∘ A smooth product surface, free from mottling and gas bubbles, which enhances the aesthetic value.
∘ Reduced production defect rate and optimized productivity.
∘ Environmentally friendly due to reduced CO₂ emissions.

### Brief description of the drawings

FIG. 1 is a cross-sectional view of the 3D-printed mold
FIG. 2 is a perspective view of the male mold
FIG. 3 is a perspective view of the female mold
FIG. 4 is a top plan view of the female mold.
FIG. 5 is a perspective view of the venting channels within the mold.
   FIG. 6 is an image of the foam structure from the supercritical injection process combined with a 3D-printed mold and fine filler.
   FIGS. 7a and 7b are images comparing the foam structure of a conventional process and the microcellular foam structure of the process according to the invention.
   FIG. 8 is an image showing the surface aesthetics of a shoe sole made by a conventional process (left) and by the process of the invention (right)

### Detailed Description of the Invention

Possible embodiments and variations of the invention are described below with reference to the drawings. For the sake of brevity and conciseness, only a few embodiments are described below. However, one of ordinary skill in the art will recognize that the specific features described in relation to these embodiments can be modified and combined in various ways, and that certain aspects of the specific embodiments may also be omitted. Furthermore, it should be noted that the aspects described in the following detailed description can be combined with the aspects described in the summary above.

To overcome the drawbacks of the prior art, the invention provides a process for manufacturing footwear sole material using MuCell technology combined with a 3D-printed mold, with the following objectives:
∘ Reduce footwear weight by 10-30% compared to conventional injection molding technology.
∘ Increase resilience and force absorption, leading to more comfortable footwear.
∘ Save thermoplastic raw materials, reducing production costs.
∘ Eliminate mottling and gas bubbles on the sole surface, improving the aesthetic properties.
∘ Increase production efficiency and reduce defect rates, as the vented 3D-printed mold design facilitates easy gas escape from the mold.
∘ Reduce CO₂ emissions, protecting the environment.

Therefore, according to a preferred embodiment, the invention relates to a process for manufacturing a footwear sole material, the process comprising the following steps:
i) Material Preparation:
   the material mixture comprises the following components by weight percentage:
   thermoplastic: 50% to 60%;
   transparent resin: 3% to 6%;
   antioxidant: 1% to 3%;
   foaming agent FOAM 45C: 15% to 25%;
   thermoplastic elastomer: 6% to 10%;
   stearic acid: 1% to 3%;
   anti-abrasion agent: 1% to 3%;
   fine filler: 0.3% to 0.5%;
iii) Microcellular Foaming:
   injecting N₂, CO₂, or Ar (Argon) gas into the molten material mixture from step i) at a pressure in a range of 200 to 280 MPa, and subsequently reducing the pressure to a range of 10 to 20 MPa to create the microcellularly foamed material;
ii) Injection Molding of the Microcellularly Foamed Material
   injecting the foamed material from step ii) through a nozzle into the mold cavity of a vented 3D-printed steel mold, wherein the 3D-printed steel mold comprises:
   a plurality of micropores having non-uniform sizes and varying densities; and
   a plurality of heat-conducting vent pins disposed at locations prone to gas trapping.

According to an embodiment of the invention, wherein the thermoplastic is selected from the group consisting of TPU, EVA, TPEE, PEbax, and VESTAMID^{®} E.

According to an embodiment of the invention, wherein the fine filler is titanium dioxide (TiO2).

According to another embodiment of the invention, wherein the fine filler has a particle size in the range of 200 to 300 nm.

According to another embodiment of the invention, wherein the microcellular foaming step is further performed at an injection temperature in a range of 180°C to 250°C and a mold temperature in a range of 30°C to 60°C.

According to another embodiment of the invention, wherein the microcellular foaming step is further performed at an injection temperature in a range of 160°C to 245°C and a mold temperature in a range of 30°C to 80°C.

According to another embodiment of the invention, wherein the microcellular foaming step is further performed at an injection temperature in a range of 180°C to 280°C and a mold temperature in a range of 30°C to 60°C.

According to another embodiment of the invention, wherein the microcellularly foamed material has a foam cell size in a range of 90 to 140 µm.

Another object of the invention is to provide a footwear sole material produced according to any one of the preceding aspects, the material comprising the following components by weight percentage:
thermoplastic: 50% to 60%;
transparent resin: 3% to 6%;
antioxidant: 1% to 3%;
foaming agent FOAM 45C: 15% to 25%;
thermoplastic elastomer: 6% to 10%;
polyethylene (PE) resin: 1% to 3%;
polyoxymethylene (POM): 2% to 4%;
stearic acid: 1% to 3%;
anti-abrasion agent: 1% to 3;
fine filler: 0.3% to 0.5%.

In another embodiment, the fine filler in the footwear sole material is titanium dioxide (TiO₂).

In yet another embodiment, the fine filler in the footwear sole material has a particle size in the range of 200 to 300 nm.

In yet another embodiment, the footwear material further comprises microcellular foam having a size in a range of 90 to 140 µm.

As is known, MuCell technology is a microcellular foam injection molding process wherein supercritical N₂, CO₂, or Ar gas is dissolved into a thermoplastic melt to create a microcellular foam structure within the product. This process helps to reduce material density and weight while maintaining crucial mechanical properties such as resilience and load-bearing capacity. This technology was developed by the Massachusetts Institute of Technology (MIT) in the 1990s and was subsequently commercialized by Trexel Inc. Currently, MuCell is widely applied in the footwear, automotive, electronics, packaging, and medical device industries.

The manufacturing process for footwear materials using a vented 3D-printed mold facilitates efficient gas venting, overcoming issues of gas trapping, material mottling, and air bubbles, thereby ensuring a smooth and uniform product surface, free from flow marks.

The combination of MuCell technology with a vented 3D-printed mold provides superior technical effects, optimizing the production process and enhancing product quality. The 3D-printed mold, with its honeycomb pore system, allows for faster gas venting, eliminating defects such as gas trapping, air bubbles, and mottling on the product surface. Concurrently, the optimized mold design helps to direct the material flow, minimizing weld lines and improving the aesthetic appearance. Furthermore, an improved heat dissipation capability helps to shorten the cooling time, increase the product formation speed and production rate, and reduce costs. The resulting product exhibits improved resilience and is not prone to peeling or delamination, thereby meeting the high-quality standards of the footwear industry.

This invention has three main points of differentiation compared to conventional injection molding technology, resulting in superior technical effects. First, it utilizes supercritical N₂ or CO₂ gas to create a microcellular foam, which helps to reduce product weight while maintaining durability. Unlike conventional technology that uses chemical foaming agents, this process is safer and more environmentally friendly. Second, the invention combines a vented 3D-printed mold, which allows for faster gas venting and eliminates defects such as air bubbles, weld lines, and mottling, whereas conventional technology lacks effective control over this process, resulting in products with aesthetic flaws. Third, the uniformly controlled microcellular structure helps to increase resilience and reduce shrinkage, whereas conventional technology results in a non-uniform material density that is prone to aging over time. Thanks to these improvements, the new technology helps to create products that are lighter, more durable, more aesthetically pleasing, and more environmentally friendly, completely overcoming the drawbacks of conventional injection molding.

The manufacturing process for footwear sole material, according to an embodiment of the invention, utilizes raw materials including types such as TPU, EVA, TPEE, Pebax, and PeBa (Polyether Block Amide), which has the trade name VESTAMID^{®} E.

As is known, TPU (Thermoplastic Polyurethane) is an elastomeric thermoplastic with high flexibility that can be processed by various methods such as injection molding, compression molding, and extrusion. TPU combines the flexibility of rubber with the durability of an engineering plastic. It is characterized by properties such as flexibility, high resilience, good abrasion resistance, good load-bearing capacity, thermal stability, and oil and chemical resistance. TPU is commonly used for shoe soles, anti-slip coatings, and high-durability footwear components.

As is known, EVA (Ethylene Vinyl Acetate) is a copolymer plastic material of ethylene and vinyl acetate, featuring high flexibility, low weight, and good shock absorption capabilities. EVA is often used in products requiring elasticity and thermal insulation. EVA is characterized by being lightweight, having good elasticity, excellent shock absorption, and low cost. Its advantages include providing cushioning, good thermal insulation, and water resistance. EVA is commonly applied in the manufacturing of midsoles for athletic shoes, insoles, and foam sandals.

TPEE (Thermoplastic Polyester Elastomer) is a thermoplastic elastomer belonging to the elastomer group, which combines the durability of an engineering plastic with the flexibility of rubber. TPEE has good load-bearing capacity, deformation resistance, and high elasticity. It is characterized by combining the durability of an engineering plastic with the elasticity of rubber. TPEE is commonly applied in the manufacturing of shoe soles and components requiring flexibility.

Pebax (Polyether Block Amide) is a thermoplastic elastomer having a block copolymer structure of polyether and polyamide. This is a lightweight, highly elastic, and thermally stable material that is widely used in the sports and medical fields. Pebax is characterized as being ultra-lightweight, highly elastic, and thermally stable. It is commonly applied in the manufacturing of high-end athletic shoes and high-performance running shoe soles.

VESTAMID^{®} E (Polyether Block Amide - PeBa) is a thermoplastic elastomer belonging to the Polyether Block Amide (PeBa) group, produced by Evonik. It is a type of block copolymer that includes polyether, which provides elasticity and flexibility, combined with polyamide, which enhances mechanical strength and thermal resistance. PeBa is characterized by good elasticity, high heat resistance, chemical resistance, abrasion resistance, and good dimensional stability. Its advantages are high mechanical strength, rapid shape recovery, resistance to oils, greases, and chemicals, and low weight. This type of plastic is commonly used for medical devices, automotive components, aerospace applications, safety shoes, and athletic shoes.

In the material preparation step, one of the aforementioned thermoplastic types is selected to be the main component in the material for shoe and sandal soles. According to an embodiment of the invention, the thermoplastic accounts for approximately 50% to 60% by mass. The material preparation process involves blending in additional additives to reduce the occurrence of sink marks on the surface. Selected additives include, but are not limited to, substances such as foaming aids, for example, azodicarbonamide (ADC), 5-phenyltetrazole, and sodium bicarbonate + citric acid, which help to control foam cell size and reduce shrinkage; dispersing and surface control agents, such as silicon-based surfactants, fluoropolymer additives, and PE/PTFE Wax, which help to smooth the surface and act as mold release agents; anti-shrinkage and foam stabilizing agents, such as zinc stearate, calcium carbonate, and modified urethane stabilizers, which help to stabilize the foam structure and limit deformation; and antistatic and anti-adhesion agents, such as ethoxylated amines and ionic and non-ionic antistatic agents, which help to disperse the material evenly and reduce static charge that causes sink marks. Additionally, the incorporation of a fine filler as an additive into the raw material mixture helps to limit the formation of sink marks, improve the surface, and enhance the quality of the footwear product. The fine filler helps to fill microvoids on the material surface and limit non-uniform shrinkage and deformation, thereby reducing the occurrence of sink marks. Moreover, the fine filler also helps to improve the homogeneity of the mixture, increasing the stability of the product manufacturing process. The fine filler is selected based on criteria such as compatibility with the base material to ensure no adverse effects on the product's mechanical properties, and a fine particle size that contributes to good dispersion in the mixture, preventing agglomeration or interference with the material's flow characteristics in the mold. According to a preferred embodiment of the invention, the fine filler is titanium dioxide TiO₂, having a fine particle size in the range of 200 to 300 nanometers (nm). Experimental processes show that this value range is suitable for the requirements of uniform dispersion, non-agglomeration, and does not affect the material flow during the injection molding process. In addition, the fine filler also meets the criteria of having high thermal stability, not decomposing or changing properties under processing conditions, being safe and environmentally friendly, and complying with the material standards for use in footwear production.

According to an embodiment of the invention, the content of the fine filler in the material mixture is in the range of 0.3% to 0.5% by mass.

Using the fine filler in the correct proportion helps to yield a product with a smooth, uniform surface, thereby minimizing surface defects during the manufacturing process.

In addition to the aforementioned proportion of fine filler, the material mixture also includes other components by weight percentage, specifically: transparent resin from 3% to 6%; antioxidant from 1% to 3%; foaming agent FOAM 45C from 15% to 25%; thermoplastic elastomer from 6% to 10%; polyethylene (PE) resin from 1% to 3%; polyoxymethylene (POM) from 2% to 4%; stearic acid from 1% to 3%; and anti-abrasion agent from 1% to 3%.

The next step in the footwear sole manufacturing process is microcellular foaming using the MuCell supercritical injection technology, which involves injecting N₂ or CO₂ gas into the molten material at a flow rate of approximately 0.02-0.05 %. The use of N₂ or CO₂ gas in the process of injection into the molten material for microcellular foaming via supercritical injection has important characteristics related to the physical and chemical properties of these gases. N₂ is an inert gas that does not react with the polymer material, which helps to ensure stability during the foaming process. CO₂ has good solubility in the polymer, which helps to create a fine and uniform foam, but it can cause mold corrosion if not properly controlled. N₂ has low solubility in the polymer but is capable of creating a uniform foam and maintaining the mechanical stability of the product. This allows for better control over the foam cell size, avoiding shrinkage or the degradation of the material's mechanical properties after the foam is formed. CO₂ has high solubility in the polymer, which helps to create a fine and uniformly distributed foam; however, it can reduce the mechanical stability of the product if not properly controlled. During the manufacturing process, N₂ /CO₂ is typically used individually rather than in combination with other gases in order to maintain stability and precise control over the foaming process. The flow rate of gas injected into the molten material is currently maintained at approximately 0.02-0.05 % per mold to ensure the uniformity of the gas cells in the material.

The pressure and temperature parameters for controlling the foam cell size for each type of thermoplastic are crucial for the foam structure of the resulting product. Therefore, according to an embodiment of the invention, N₂ , CO₂ , or Ar (Argon) gas is injected into the molten raw material mixture at a pressure in a range of 200 to 280 MPa, followed by a pressure drop to a range of 10-20 MPa to create foam within the mixture, thereby producing a microcellularly foamed material.

According to another embodiment of the invention, the microcellular foaming step is further performed at an injection temperature in a range of 160°C to 245°C and a mold temperature in a range of 30°C to 80°C.

According to yet another embodiment of the invention, wherein the microcellular foaming step is further performed at an injection temperature in a range of 180°C to 280°C and a mold temperature in a range of 30°C to 60°C.

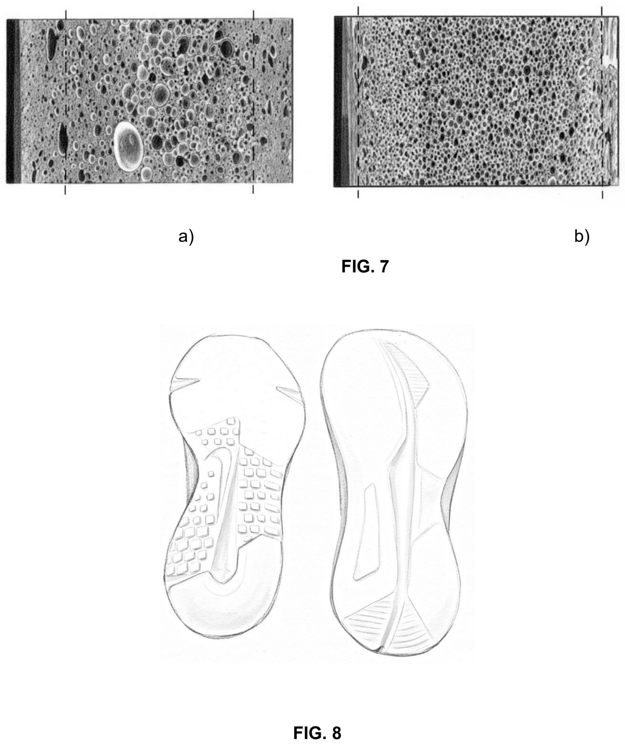

With each of the above-proposed embodiments, the result is the creation of a material with a uniform microcellular foam structure, which helps to make the product lighter while still ensuring durability. The uniform microstructure of the product is demonstrated by the diameter of the gas cells distributed in the post-foaming material, with sizes ranging from 90-140 µm. This size range ensures the stability and uniformity of the cellular structure, contributing to the enhancement of the mechanical strength, resilience, and surface quality of the foamed product. As shown in FIGS. 7a and 7b, images of the foam structure according to the inventive process exhibit uniform and stable cell sizes.

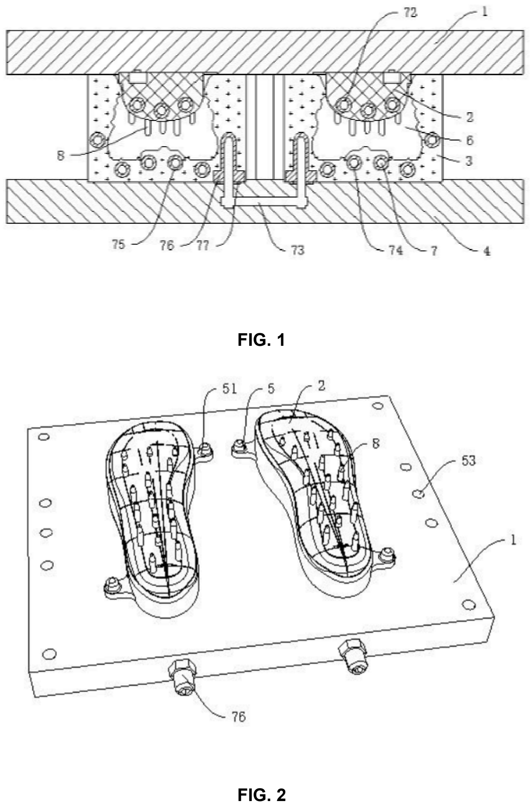

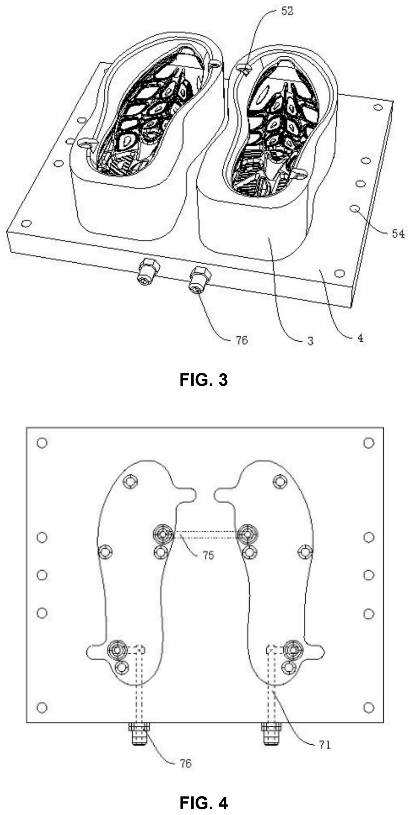

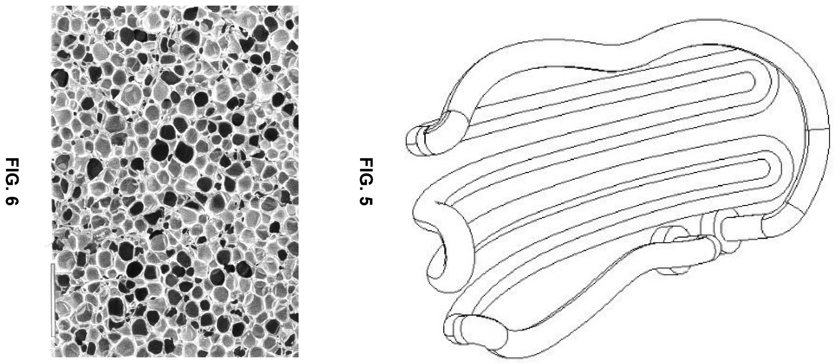

The next step is injection molding into the vented 3D-printed mold. During the process of introducing the foamed material into the 3D-printed mold, after the plastic has been microcellularly foamed in the injection barrel, the screw pushes the molten plastic portion through the nozzle into the mold cavity. The mold is clamped shut to create high pressure, allowing the foamed material mixture to fill the mold cavity without leakage, while integrated vent holes in the mold help to remove excess gas during the injection process. As shown in FIGS. 1, 2, 3, 4, and 5, the vented 3D-printed mold includes a male mold 1 and a female mold 4, a male mold core 2, a female mold cavity 3, a mold cavity 6, a vent hole 7, heat-conducting vent pins 8, 72, 74, a vent pipe 73 connecting the left and right foot molds, vent outlets 76, 77, nuts 5, 51 for securing the male mold core, 52 threaded holes for securing the mold core, a contact point 53 between the vent pipes of the male and female molds, a nut for securing a bottom mold core, a contact point 54 between the vent pipes of the male and female molds, and vent pipes 71, 75.

With a structure comprising multiple irregular pores, the 3D-printed mold allows for flexible gas venting, reducing defects such as gas trapping, air bubbles, and mottling during the supercritical injection molding process. Thanks to the pore design featuring varying sizes and densities, gas can escape in multiple directions, avoiding localized gas accumulation and helping to create a smoother product surface, free from weld lines. Concurrently, the system of micropores, 3D-printed with high precision, allows gas to escape quickly without material leakage. In addition, this mold also increases cooling efficiency and accelerates the formation speed, which helps to reduce production time and enhance product quality. Furthermore, the arrangement of heat-conducting pins in locations prone to gas trapping helps gas to escape from the mold more quickly; moreover, it also helps to reduce the weight of the product.

The foamed material is pressed into the mold cavity 6, with the pressing force accelerating the formation speed while preserving the micro-foam structure within the product. After being formed in the mold, the product is removed and finished by trimming, cleaning, and assembling the parts.

### Working Example

The invention will be further illustrated by the following working example, which is not intended to limit the scope of the invention.

Implementation of the Shoe Sole Manufacturing Process:
Step 1: Mix the raw material components, ensuring the following proportions:
   ∘ thermoplastic: 50% to 60%;
   ∘ transparent resin: 3% to 6%;
   ∘ antioxidant: 1% to 3%;
   ∘ foaming agent FOAM 45C: 15% to 25%;
   ∘ thermoplastic elastomer: 6% to 10%;
   ∘ polyethylene (PE) resin: 1% to 3%;
   ∘ polyoxymethylene (POM): 2% to 4%;
   ∘ stearic acid: 1% to 3%;
   ∘ anti-abrasion agent: 1% to 3%;
   ∘ fine filler: 0.3% to 0.5%
Step 2: Microcellular Foaming using MuCell Technology
   Inject N₂ , CO₂, or Ar (Argon) gas into the molten material mixture to create a supercritical foam at a flow rate of approximately 0.02-0.05%. For each type of thermoplastic, the processing parameters are as follows:
   - TPU (Thermoplastic Polyurethane):
      - Injection temperature: 180 - 250°C
      - Mold temperature: 30 - 60°C
      - N₂/CO₂ gas injection pressure: 200 - 280 MPa
      - Pressure drop for foaming: 10 - 20 MPa
   - EVA (Ethylene Vinyl Acetate):
      - Injection temperature: 160 - 245°C
      - Mold temperature: 30 - 80°C
      - N₂/CO₂ gas injection pressure: 200 - 280 MPa
      - Pressure drop for foaming: 10 - 20 MPa
   - TPEE (Thermoplastic Polyester Elastomer):
      - Injection temperature: 180 - 250°C
      - Mold temperature: 30 - 60°C
      - N₂/CO₂ gas injection pressure: 200 - 280 MPa
      - Pressure drop for foaming: 10 - 20 MPa
   - Pebax (Polyether Block Amide):
      - Injection temperature: 180 - 280°C
      - Mold temperature: 30 - 60°C
      - N₂/CO₂ gas injection pressure: 200 - 280 MPa
      - Pressure drop for foaming: 10 - 20 MPa
   - VESTAMID^{®} E (Polyether Block Amide - PeBa)
      - Injection temperature: 180 - 280°C
      - Mold temperature: 30 - 60°C
      - N₂/CO₂ gas injection pressure: 200 - 280 MPa
      - Pressure drop for foaming: 10 - 20 MPa
Step 3: Injection Molding of the Microcellularly Foamed Material into the Vented 3D-Printed Mold

The foamed material mixture is introduced into the 3D-printed steel mold as the screw pushes the molten material mixture portion through the nozzle and into the mold cavity. Subsequently, the mold is clamped shut to create high pressure, allowing the foamed material mixture to fill the mold cavity without leakage, while vent holes in the mold help to remove excess gas during the injection. The 3D-printed steel mold has multiple irregular pores that allow for flexible gas venting, reducing defects such as gas trapping, air bubbles, and mottling during the supercritical injection molding process. Heat-conducting pins on the mold are installed in locations prone to gas trapping, which helps gas to escape more quickly.

### Step 4: Product Finishing:

Demold the product, then trim the excess edges, clean the product, and assemble the parts together.

Table 1 below shows the quality control test results for the durability, resilience, and weight of the product manufactured according to the process of the invention.

| | **TPU** | **EVA** | **TPEE** | **PEBAX** |
|---|---|---|---|---|
| Density (g/cm³) | 0,1 - 0,3 | 0,1 - 0,3 | 0,1 - 0,3 | 0,1-0,3 |
| Hardness (Asker C) | 35 - 60 | 35 - 60 | 35 -60 | 35 - 60 |
| Tensile Strength (kgf/cm²) | 15-25 | 15-25 | 15-25 | 15-25 |
| Elongation (%) | >280 | >280 | >280 | >280 |
| Tear Strength (kg/cm) | >3,5 | >3,5 | >3,5 | >3,5 |
| Resilience (%) | >45 | >45 | >45 | >45 |
| Compression Set (%) | <60 | <60 | <60 | <60 |
| Shrinkage (%) | <2 | <2 | <2 | <2 |

FIG. 8 is an image showing the surface aesthetics of a product of the prior art versus the surface aesthetics of a product according to the invention. It can be seen that the surface of the product according to the invention is smooth, even, free from mottling, and not pitted by gas bubbles, and has a smoother surface compared to the prior art.

### Industrial Applicability

The solution according to the invention is applicable in the production of:
- Athletic shoes (e.g., Nike^{®}, Adidas^{®}, Puma^{®}, Decathlon^{®}): Lightweight, durable, providing good motion support.
- Fashion footwear: Reduced weight while maintaining an attractive design.
- Medical footwear, shoes for the elderly: Cushioned, reducing pressure on the feet.
- Slippers and sandals: Reduced plastic consumption while maintaining durability.
- Protective gear (safety shoes, safety helmets, shock-absorbing liners, technical gloves): Lighter due to the microcellular foam structure, which helps to reduce fatigue during prolonged use; increased resilience and force absorption, providing better protection against impacts; while also reducing material consumption, being environmentally friendly, and still ensuring safety standards.

## Claims

1. A process for manufacturing a footwear sole material, the process comprising the steps of:
i) material preparation:
the raw material mixture comprises the following components by weight percentage:
50% to 60% of a thermoplastic;
3% to 6% of a transparent resin;
1% to 3% of an antioxidant;
15% to 25% of a foaming agent FOAM 45C;
6% to 10% of a thermoplastic elastomer;
1% to 3% of a polyethylene (PE) resin;
2% to 4% of a polyoxymethylene (POM);
1% to 3% of stearic acid;
1% to 3% of an anti-abrasion agent;
0.3% to 0.5% of a fine filler;
ii) microcellular foaming:
injecting N₂, CO₂, or Ar (Argon) gas into the molten raw material mixture from step i) at a pressure in a range of 200 to 280 MPa, and reducing the pressure to a range of 10 to 20 MPa to thereby create a foamed material;
iii) injection molding the microcellularly foamed material
introducing the foamed material from step ii) into a vented 3D-printed steel mold via a nozzle and into a mold cavity, wherein the 3D-printed steel mold comprises:
a plurality of micropores having non-uniform sizes and varying densities; and
a plurality of heat-conducting vent pins disposed at locations prone to gas trapping.

2. The process according to claim 1, wherein the thermoplastic is selected from the group consisting of TPU, EVA, TPEE, PEbax, and VESTAMID^{®} E.

3. The process according to any one of the preceding claims, wherein the fine filler is titanium dioxide (TiO₂).

4. The process according to any one of the preceding claims, wherein the fine filler has a particle size in the range of 200 to 300 nm.

5. The process according to any one of the preceding claims, wherein the microcellular foaming step is further performed at an injection temperature in a range of 180°C to 250°C and a mold temperature in a range of 30°C to 60°C.

6. The process according to any one of the preceding claims, wherein the microcellular foaming step is further performed at an injection temperature in a range of 160°C to 245°C and a mold temperature in a range of 30°C to 80°C.

7. The process according to any one of the preceding claims, wherein the microcellular foaming step is further performed at an injection temperature in a range of 180°C to 280°C and a mold temperature in a range of 30°C to 60°C.

8. The process according to any one of the preceding claims, wherein the microcellularly foamed material has a foam cell size in a range of 90 to 140 µm.

9. A footwear sole material produced by the process of any one of claims 1 to 8, wherein the material comprises the following components by weight percentage:
50% to 60% of a thermoplastic;
3% to 6% of a transparent resin;
1% to 3% of an antioxidant;
15% to 25% of a foaming agent FOAM 45C;
6% to 10% of a thermoplastic elastomer;
1% to 3% of a polyethylene (PE) resin;
2% to 4% of a polyoxymethylene (POM);
1% to 3% of stearic acid;
1% to 3% of an anti-abrasion agent;
0.3% to 0.5% of a fine filler.

10. The footwear sole material according to claim 9, wherein the thermoplastic is selected from the group consisting of TPU, EVA, TPEE, PEbax, and VESTAMID^{®} E.

11. The footwear sole material according to any one of the preceding claims, wherein the fine filler is titanium dioxide (TiO₂).

12. The footwear sole material according to any one of the preceding claims, wherein the fine filler has a particle size in the range of 200 to 300 nm.

13. The footwear sole material according to any one of the preceding claims, wherein the material further comprises microcells having a size in a range of 90 to 140 µm.
